# EUROPÄISCHE PATENTSCHRIFT

(11) **EP 1 604 762 B1**
(45) Veröffentlichungstag und Bekanntmachung des Hinweises auf die Patenterteilung: **14.11.2007**
(21) Anmeldenummer: 05104990.6
(22) Anmeldetag: 08.06.2005
(51) Int. Cl.: B23B 51/02, B28D 1/14, E21B 10/46

(54) **Bohrer**
Drill
Foret

(30) Priorität: 09.06.2004 DE 102004028098
(43) Veröffentlichungstag der Anmeldung: 14.12.2005
(73) Patentinhaber: HILTI Aktiengesellschaft, 9494 Schaan (LI)
(72) Erfinder: Batliner, Rainer, 9486 Schaanwald (LI); Koch, Olaf, 86916 Kaufering (DE); Hofmann, Karl-Heinz, 86947 Weil (DE); Britten, Werner, 66125 Saarbrücken (DE)
(74) Vertreter: Wildi, Roland

(56) Entgegenhaltungen:
- DE-A1- 10 006 932
- FR-A- 2 779 366

## Beschreibung

### Technisches Gebiet

Die Erfindung betrifft einen Bohrer, insbesondere einen Bohrer für Bohrhämmer zum Bohren in Gestein, Beton oder dergleichen, der im Oberbegriff des Patentanspruchs 1 genannten Art (siehe FR 2 779 366).

### Stand der Technik

Der Bohrkopf ist entweder aus einem Hartstoffkörper gebildet, der stumpf an einem stirnseitigen Ende des Bohrerschafts festgelegt wird, oder weist Hartstoffeinsätze auf, die in entsprechenden Ausnehmungen am Bohrkopf festgelegt werden. Der Bohrkopf wird beispielsweise mittels Löten oder Schweissen am Bohrerschaft des Bohrers festgelegt. Die Hartstoffeinsätze können in der gewünschten Form einteilig oder mehrteilig, aus mehreren einzelnen Elementen zusammengesetzt ausgebildet werden. Üblicherweise werden als Hartstoffe Hartmetalle oder gesinterte Stoffe verwendet.

Die Bohrer sind mit Zentrierspitzen an dem Hartstoffkörper versehen, womit ein punktgenaues Anbohren ermöglicht und ein so genanntes Verlaufen der Bohrung bei grösseren Bohrtiefen verhindert wird. Um die Führungsaufgabe der Zentrierspitze beim Bohren zu gewährleisten, sind diese üblicherweise axial stark exponiert bezüglich des Bohrkopfes angeordnet. Bei der Verwendung des Bohrers in einem bewehrten Beton kommt es infolge des Axialüberstandes der Zentrierspitze beim Auftreffen des Bohrers auf ein Bewehrungseisen häufig zu Gewaltsausbrüchen im Bereich der Zentrierspitze, was die Gebrauchstauglichkeit des Bohrers massgeblich reduziert.

Aus der WO 01/08840 A1 ist ein Bohrer bekannt, bei dem die Zentrierspitze durch konkav verlaufende Schneidkanten der Schneiden des Bohrkopfes gebildet ist. Nachteilig an der bekannten Lösung ist, dass die Abbauleistung gegenüber Schneiden mit linearen Schneidkanten reduziert ist.

Aus der DE 100 53 344 A1 ist ein Bohrer bekannt, der drei radial verlaufende Schneiden aufweist, wobei die Schneiden an radialen Schenkeln eines Hartstoffkörpers ausgebildet sind. In dessen Mitte ist eine die Schneiden überragende Zentrierspitze vorgesehen, die von zwischen linear verlaufenden, zusätzlichen Schneidkanten aufgespannten ebenen Begrenzungsflächen gebildet ist.

Nach der DE10006932 weist ein Bohrkopf vier sich radial erstreckende Schneiden auf, die in einer Zentrierspitze zusammenlaufen, wobei in der Zentrierspitze die Übergangsfläche (Begrenzungsfläche) zwischen zwei benachbarten Schneiden konkav ausgebildet ist. Dabei ist der Keilwinkel jeder Schneide vom radialen Aussenrand bis zur Zentrierspitze identisch.

Aus der FR 2 779 366 A1 ist ein Bohrer mit einem Bohrkopf bekannt, der drei radial verlaufende Schneiden aufweist, wobei die Schneiden an radialen Schenkeln eines Hartstoffeinsatzes ausgebildet sind. In der Mitte des Bohrkopfes ist eine die Schneiden überragende Zentrierspitze vorgesehen, die von zwischen linear verlaufenden, zusätzlichen Schneidkanten aufgespannten, ebenen Begrenzungsflächen gebildet ist.

Nachteilig an den bekannten Lösungen ist, dass die Materialverstärkung im Bereich der Zentrierspitze durch Ausformung von pyramidalen Strukturen mit ebenen Begrenzungsflächen die Abbaugeschwindigkeit des Bohrers massgeblich senkt. Des Weiteren ist in der Regel die Anzahl der durch die Begrenzungsflächen gebildeten, linear verlaufenden, zusätzlichen Schneidkanten der Zentrierspitze auf die Anzahl der Hauptschneiden begrenzt.

### Darstellung der Erfindung

Aufgabe der Erfindung ist es, einen Bohrer zu schaffen, der die oben genannten Nachteile vermeidet und insbesondere eine stabile Zentrierspitze aufweist, wobei der Bohrer eine gute Abbauleistung aufweist.

Die Aufgabe ist durch die Merkmale des unabhängigen Anspruchs gelöst. Vorteilhafte Weiterbildungen sind in den Unteransprüchen dargelegt.

Gemäss der Erfindung sind die Begrenzungsflächen zwischen den linear verlaufenden, zusätzlichen Schneidkanten der Zentrierspitze konkav ausgebildet.

Durch die konkave Ausgestaltung der Begrenzungsflächen kann die pyramidale Struktur zur Stützung der Zentrierspitze genutzt werden, wobei die Abbauleistung des Bohrers nur unwesentlich reduziert wird. Infolge der robusten Ausgestaltung der Zentrierspitze ist ein punktgenaues Bohren ermöglicht und ein Verlaufen der Bohrung wird auch bei grösseren Bohrtiefen verhindert. Zudem treten nur geringere Ausbrüche beim Auftreffen des Bohrers auf ein Bewehrungseisen auf. Die Anzahl der Begrenzungsflächen kann bei dem erfindungsgemässen Bohrer entsprechend den gewünschten Anforderungen gewählt werden und ist im Wesentlichen nicht mehr durch die konstruktiven Erfordernisse bei der Fertigung des Bohrkopfes beziehungsweise des Hartstoffkörpers begrenzt.

Vorzugsweise ist die Zentrierspitze von vier Begrenzungsflächen gebildet. Diese Ausführung stellt einen guten Kompromiss zwischen den Erfordernissen einer ausreichenden Stützung der Zentrierspitze und einer hohen Abbaugeschwindigkeit dar.

Bevorzugt verläuft die tiefste Stelle der Ausbuchtung der konkaven Ausbildung der Begrenzungsflächen im Wesentlichen auf einer Winkelhalbierenden zwischen zwei benachbarten, linear verlaufenden, zusätzlichen Schneidkanten. Mit dieser Ausführung wird ein vorteilhaftes Abbauverhalten bei einer hohen Abbaugeschwindigkeit erreicht.

Gemäß der Erfindung ist der Keilwinkel der linear verlaufenden, zusätzlichen Schneidkanten kleiner als der Keilwinkel der Schneiden ausgebildet. Der gegenüber den Schneiden aggressivere Winkel unterstützt vorteilhaft das Abbauverhalten des Bohrers beziehungsweise des Bohrkopfes.

Bevorzugt weist der Bohrkopf als Schneiden zwei Hauptschneiden und Nebenschneiden auf, wobei zwei der linear verlaufenden, zusätzlichen Schneidkanten im Wesentlichen in Richtung des Verlaufes der Hauptschneiden ausgerichtet sind. Diese Ausrichtung der linear verlaufenden, zusätzlichen Schneidkanten verbessert zusätzlich das Abbauverhalten des Bohrers beziehungsweise des Bohrkopfes.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand von Ausführungsbeispielen näher erläutert. Es zeigen:
- Fig. 1: Eine Aufsicht auf eine schematisch dargestellte Zentrierspitze;
- Fig. 2: eine Seitenansicht der in Fig. 1 dargestellten Zentrierspitze;
- Fig. 3: eine Seitenansicht des Bohrkopfs eines erfindungsgemässen Bohrers; und
- Fig. 4: eine Aufsicht auf den Bohrkopf des in Fig. 3 dargestellten erfindungsgemässen Bohrers.

Grundsätzlich sind in den Figuren gleiche Teile mit den gleichen Bezugszeichen versehen.

### Wege zur Ausführung der Erfindung

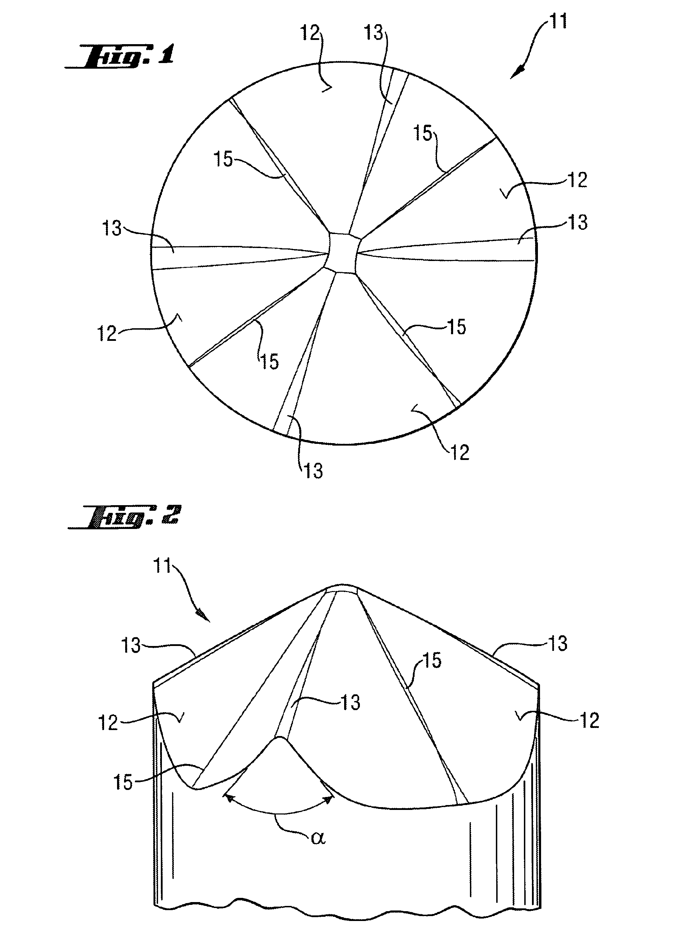

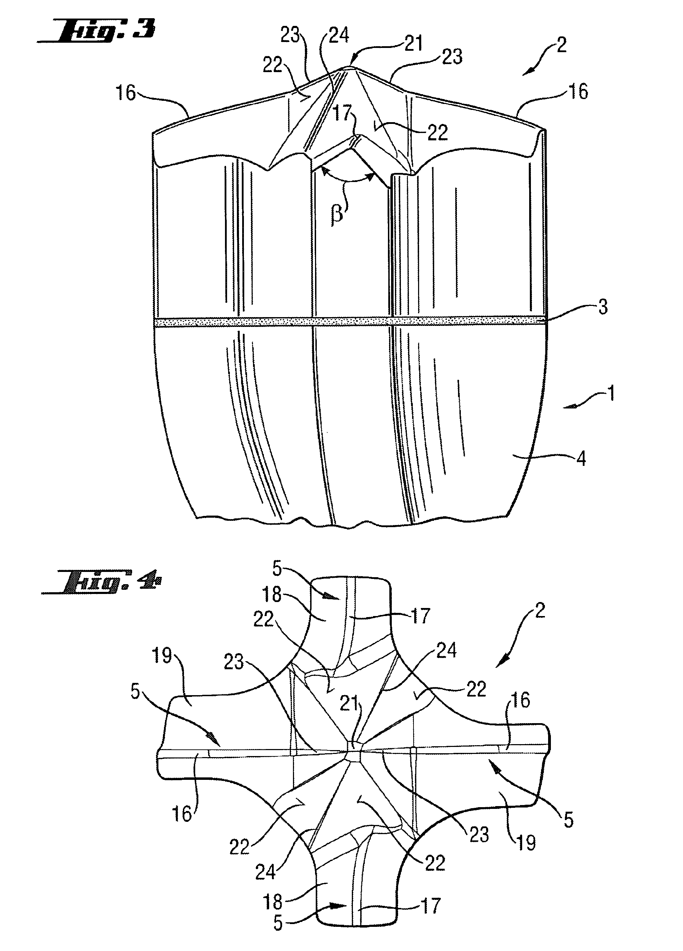

Die in den Fig. 1 und Fig. 2 schematisch dargestellte Zentrierspitze 11, z. B. als Teil eines Bohrkopfes eines Bohrers, ist durch vier konkav ausgebildete Begrenzungsflächen 12 gebildet beziehungsweise gestützt, welche zwischen linear verlaufenden, zusätzlichen Schneidkanten 13 aufgespannt sind. Die tiefste Stelle der Ausbuchtungen 15 der konkaven Begrenzungsflächen 12 verlaufen im Wesentlichen zwischen zwei benachbarten, linear verlaufenden, zusätzlichen Schneidkanten 13. Der Keilwinkel α der linear verlaufenden, zusätzlichen Schneidkanten 13 ist kleiner als der Keilwinkel einer Nebenschneide (hier nicht dargestellt; entspricht jedoch dem, in der Fig. 3 dargestellten Keilwinkel β der Nebenschneide 17) bzw. einer Hauptschneide ausgebildet.

Der in den Fig. 3 und Fig. 4 dargestellte Bohrkopf 2 eines Bohrers 1 ist als einteiliger Hartstoffkörper aus Hartmetall ausgebildet und mittels einer Lötverbindung 3 am Bohrerschaft 4 festgelegt. Der Bohrerkopf 2 weist vier Schneiden 5 auf, wobei zwei Schneiden 5 als Hauptschneiden 16 und zwei Schneiden 5 als Nebenschneiden 17 dienen. Die Hauptschneiden 16 und die Nebenschneiden 17 sind an radialen Schenkeln 18, 19 des Hartstoffkörpers ausgebildet. In dessen Mitte ist eine die Schneiden 16, 17 überragende Zentrierspitze 21 vorgesehen, die von zwischen linear verlaufenden, zusätzlichen Schneidkanten 23, 24 aufgespannten, konkav ausgebildeten Begrenzungsflächen 22 gebildet ist. Die beiden linear verlaufenden, zusätzlichen Schneidkanten 23 sind in Richtung des Verlaufs der Hauptschneiden 16 ausgerichtet.

## Patentansprüche

1. Bohrer, insbesondere ein Bohrer (1) für Bohrhämmer zum Bohren in Gestein, Beton oder dergleichen, mit einem Bohrkopf (2), der zumindest drei radial verlaufende Schneiden (5) aufweist, wobei die Schneiden (5) an radialen Schenkeln (18, 19) eines Hartstoffkörpers ausgebildet sind, in dessen Mitte eine die Schneiden (16, 17) überragende Zentrierspitze (11; 21) vorgesehen ist, die von zwischen linear verlaufenden, zusätzlichen Schneidkanten (13; 23, 24) aufgespannten Begrenzungsflächen (12; 22) gebildet ist, **dadurch gekennzeichnet, dass** die Begrenzungsflächen (12; 22) zwischen den linear verlaufenden, zusätzlichen Schneidkanten (13; 23, 24) der Zentrierspitze (11; 21) konkav ausgebildet sind und dass der Keilwinkel (α) der linear verlaufende, zusätzlichen Schneidkanten (13; 23, 24) kleiner als der Keilwinkel der Schneiden (5) ausgebildet ist.

2. Bohrer nach Anspruch 1, **dadurch gekennzeichnet, dass** die Zentrierspitze (11; 21) von vier Begrenzungsflächen (12; 22) gebildet ist.

3. Bohrer nach Anspruch 1 oder 2, **dadurch gekennzeichnet, dass** die tiefste Stelle der Ausbuchtung (15) der konkaven Ausbildung der Begrenzungsflächen (12) im Wesentlichen auf einer Winkelhalbierenden zwischen zwei benachbarten, linear verlaufenden, zusätzlichen Schneidkanten (13) verläuft.

4. Bohrer nach einem der Ansprüche 1 bis 3, **dadurch gekennzeichnet, dass** der Bohrkopf (2) als Schneiden (5) zwei Hauptschneiden (16) und Nebenschneiden (17) aufweist, wobei zwei der linear verlaufenden, zusätzlichen Schneidkanten (23) im Wesentlichen in Richtung des Verlaufes der Hauptschneiden (16) ausgerichtet sind.

## Claims

1. A drill, in particular a drill (1) for hammer drills for drilling in stone, concrete or the like, having a drill head (2) which has at least three radially extending cutters (5), the cutters (5) being formed on radial wings (18, 19) of a hard-material body, in the middle of which a centering point (11; 21) is provided which projects above the cutters (16, 17) and is formed by delimiting surfaces (12; 22) stretching between linearly extending, auxiliary cutting edges (13; 23, 24), **characterized in that** the delimiting surfaces (12; 22) are formed between the linearly extending, auxiliary cutting edges (13; 23, 24) of the centering point (11; 21) in such a way as to be concave in form, **and in that** the wedge angle (α) of the linearly extending, auxiliary cutting edges (13; 23, 24) is smaller than the wedge angle of the cutters (5).

2. A drill according to Claim 1, **characterized in that** the centering point (11; 21) is formed by four delimiting surfaces (12; 22).

3. A drill according to Claim 1 or 2, **characterized in that** the lowest point of the depression (15) of the concave configuration of the delimiting surfaces (12) runs essentially on an angle bisector between two adjacent, linearly extending, auxiliary cutting edges (13).

4. A drill according to one of Claims 1 to 3, **characterized in that,** as cutters (5), the drill head (2) has two main cutters (16) and secondary cutters (17), two of the linearly extending, auxiliary cutting edges (23) being aligned substantially in the direction of extension of the main cutters (16).

## Revendications

1. Foret, en particulier un foret (1) pour des marteaux perforateurs pour le forage dans la roche, le béton ou analogue, comprenant une tête de forage (2) qui comporte au moins trois taillants s'étendant radialement (5), les taillants (5) étant réalisés sur des branches radiales (18, 19) d'un corps en substance dure au centre duquel est prévue une pointe de centrage (11 ; 21) qui dépasse des taillants (16, 17) et qui est formée par des surfaces de délimitation s'étendant linéairement (12 ; 22) qui définissent des arêtes de coupe supplémentaires (13 ; 23, 24), **caractérisé en ce que** les surfaces de délimitation (12 ; 22) sont configurées de manière concave entre les arêtes de coupe supplémentaires s'étendant linéairement (13 ; 23, 24) de la pointe de centrage (11 ; 21), et l'angle de taillant (α) des arêtes de coupe supplémentaires s'étendant linéairement (13 ; 23, 24) est inférieur à l'angle de taillant des taillants (5).

2. Foret selon la revendication 1, **caractérisé en ce que** la pointe de centrage (11 ; 21) est formée par quatre surfaces de délimitation (12 ; 22).

3. Foret selon la revendication 1 ou 2, **caractérisé en ce que** le point le plus bas de l'échancrure (15) de la configuration concave des surfaces de délimitation (12) s'étend sensiblement sur une bissectrice entre deux arêtes de coupe supplémentaires s'étendant linéairement (13) voisines.

4. Foret selon une des revendications 1 à 3, **caractérisé en ce que** la tête de forage (2) comporte, comme taillants (5), deux taillants principaux (16) et deux taillants secondaires (17), deux des arêtes de coupe supplémentaires s'étendant linéairement (23) étant sensiblement orientées dans la direction du tracé des taillants principaux (16).
